(19) Europäisches Patentamt
European Patent Office
Office européen des brevets

(11) Publication number: **0 424 110 A2**

# (12) EUROPEAN PATENT APPLICATION

(21) Application number: **90311350.4**

(51) Int. Cl.$^5$: **G02B 5/18**

(22) Date of filing: **17.10.90**

(30) Priority: **18.10.89 JP 269208/89**

(43) Date of publication of application:
**24.04.91 Bulletin 91/17**

(84) Designated Contracting States:
**DE FR GB**

(71) Applicant: **KONICA CORPORATION**
**26-2, Nishi-shinjuku 1-chome Shinjuku-ku**
**Tokyo(JP)**

(72) Inventor: **Komatsu, Katsuaki**
**c/o Konica Corporation, 1, Sakuramachi**
**Hono-shi, Tokyo(JP)**
Inventor: **Sato, Takusei**
**c/o Konica Corporation, 1, Sakuramachi**
**Hono-shi, Tokyo(JP)**

(74) Representative: **Ellis-Jones, Patrick George Armine et al**
**J.A. KEMP & CO. 14 South Square Gray's Inn**
**London WC1R 5LX(GB)**

## (54) Diffraction grating for colour separation and method for producing the same.

(57) Disclosed is a diffraction grating for color separation comprising a transparent plate with its thickness being varied in repeated step shape along one direction on its plate surface, having a film of plural layers comprising different materials from each other formed on a substrate and having a part of these plural layers subjected successively to etching to form a step shape. Disclosed is also a method for producing the same.

EP 0 424 110 A2

Xerox Copy Centre

# DIFFRACTION GRATING FOR COLOR SEPARATION AND METHOD FOR PRODUCING THE SAME

## BACKGROUND OF THE INVENTION

This invention relates to a separation and a method for producing the same.

As a color separating element, there is, for example, a diffraction grating as disclosed in Japanese Patent Publication No. 45210/1986.

The diffraction grating, as shown in Fig. 2, is constituted of a transparent plate such as glass plate, etc. with its thickness being varied along one direction on its plate surface in repeated step shape, the variance of height of each step being formed so as to give rise to an optical path difference of an integer-fold of a certain wavelength selected, such as formation of separated color images of R (red), G (green), B (blue) by varying the height of respective steps repeatedly in three steps.

With this construction, for example, as shown in the use example in line scanning device of color image in Fig. 3, by guiding the light of a color image on one line on an original 1 to a diffraction grating 5 through a lens 2, a slit 3 and a lens 4, the color image can be color separated into RGB by the diffraction grating 5 and read by the respective line sensors 6 arranged in three rows.

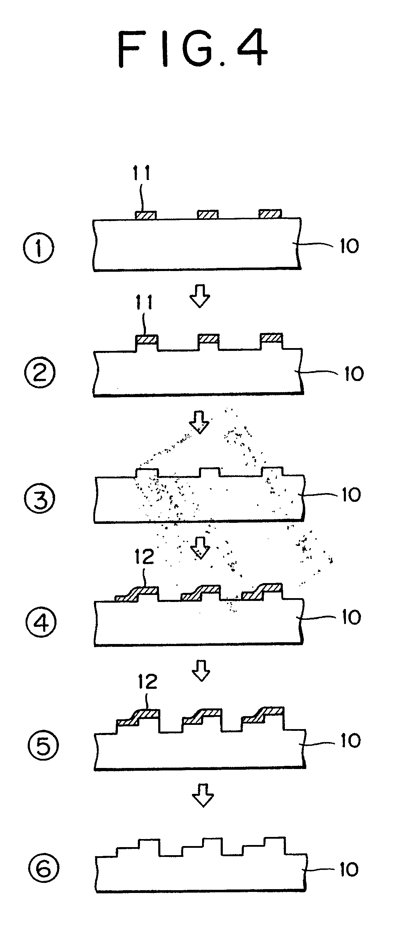

Whereas, the diffraction grating of the prior art has been generally formed by etching of a glass plate, and its production process is shown below (see Fig. 4).

(1) A first resist pattern 11 is formed on a glass plate 10.

(2) The surface of the glass plate 10 not covered with the first resist pattern 11 is etched to a certain depth by application of etching.

(3) The first resist pattern 11 is removed.

(4) A second resist pattern 12 is formed.

(5) Etching is applied to etch a part of the etched portion by previous etching not covered with the second resist pattern 12 to a certain depth.

(6) The second resist pattern 12 is removed.

However, according to such production process, etching time is controlled for obtaining a certain etching depth, but it is difficult to make the etching speed uniform at the respective portions, whereby variance occurs in etching depth to pose a problem that it is difficult to prepare the height of the steps in a diffraction grating uniformly within an element or between elements with good precision.

## SUMMARY OF THE INVENTION

The present invention has been accomplished in view of such problem of the prior art, and its object is to provide a diffraction grating for color separation which can make the height of steps uniform and with good precision easily in preparation.

For this purpose, the present invention forms a film of a plurality of layers comprising different materials from each other on a substrate, and subjecting a part of the film of these plurality of layers successively to etching, thereby forming a step shape to constitute a diffraction grating for color separation.

More specifically, a plurality of layers of film are successively etched to form a diffraction grating, and by combination of a film comprising a plurality of layers with materials having high selection ratios of etching different from each other, the etching depth can be easily regulated corresponding to the film thickness and the height of the step can be determined by the film thickness, whereby the height within the element and between elements becomes constant.

## BRIEF DESCRIPTION OF THE DRAWINGS

Fig. 1 illustrates a preparation process of the diffraction grating for color separation as an embodiment of the present invention.

Fig. 2 illustrates the shape of the diffraction grating.

Fig. 3 illustrates a use example of the diffraction grating.

Fig. 4 illustrates a preparation process of the diffraction grating of the prior art.

## DESCRIPTION OF THE PREFERRED EMBODIMENTS

Referring now to Fig. 1, an embodiment of the present invention is to be described.

A preparation process when using a glass plate as the transparent substrate and combining two layers of film of $Si_3N_4$ and $SiO_2$ is shown below.

### (a) Film formation

On a glass substrate 20, an $Si_3N_4$ film 21 and an $SiO_2$ film 22 are successively deposited. This may be performed according to, for example, the sputtering deposition methcd, the vacuum deposition method or the CVD (chemical vapor deposition) method.

(b) Patterning of $SiO_2$ film

A resist pattern is formed on the $SiO_2$ film 22, and by etching by use of an etchant for $SiO_2$ (e.g. mixture of hydrofluoric acid and ammonium fluoride), a part of the $SiO_2$ film 22 is etched to the depth of the film thickness of the film 22. Then, the resist is removed.

(c) Patterning of $Si_3N_4$ film

On the $Si_3N_4$ film 21 and the $SiO_2$ film 22 is formed a resist pattern, and a part of the $Si_3N_4$ film 21 is etched by dry etching to the depth of the thickness of the film 21. Then, the resist is removed.

Accordingly, the first etching may be effected corresponding to the film thickness of the $SiO_2$ film 22, and the second etching to the film thickness of the $Si_3N_4$ film 22, and management of these processes can be easily done by selection of the etching method, whereby the height of the step can be determined depending on the film thickness to make the height of the step constant.

As the transparent substrate, in addition to glass substrate, quartz, acrylic resin, etc. can be also employed.

As the film of a plurality of layers, the abovementioned example is not limited, but various kinds of materials can be used, provided that they are different in corrosiveness to the etchant, for example, $Ta_2O_5$, $TiO_2$, etc.

As described above, according to the present invention, it has become easier in preparation to make the step of height in diffraction grating for color separation uniform and with good precision, whereby there is obtained the effect that color separation performance is improved to a great extent.

## Claims

1. A diffraction grating for color separation comprising a transparent plate with its thickness being varied in repeated step shape along one direction on its plate surface, having a film of plural layers comprising different materials from each other formed on a substrate and having a part of these plural layers subjected successively to etching to form a step shape.
2. The diffraction grating according to Claim 1, wherein the substrate is made of at least one selected from the group consisting of glass, quartz and acrylic resin.
3. The diffraction grating according to Claim 1, wherein the film of plural layers is made of at least one selected from the group consisting of $SiO_2$, $Si_3N_4$, $Ta_2O_5$ and $TiO_2$.
4. The diffraction grating according to Claim 1, wherein the different materials of then film of plural layers are different in corrosiveness to an etchant used in etching.
5. A method for producing a diffraction grating for color separation comprising a transparent plate with its thickness being varied in repeated step shape along one direction on its plate surface, comprising forming a film of plural layers comprising different materials from each other on a substrate and subjecting a part of these plural layers successively to etching to form a step shape.

FIG. 1

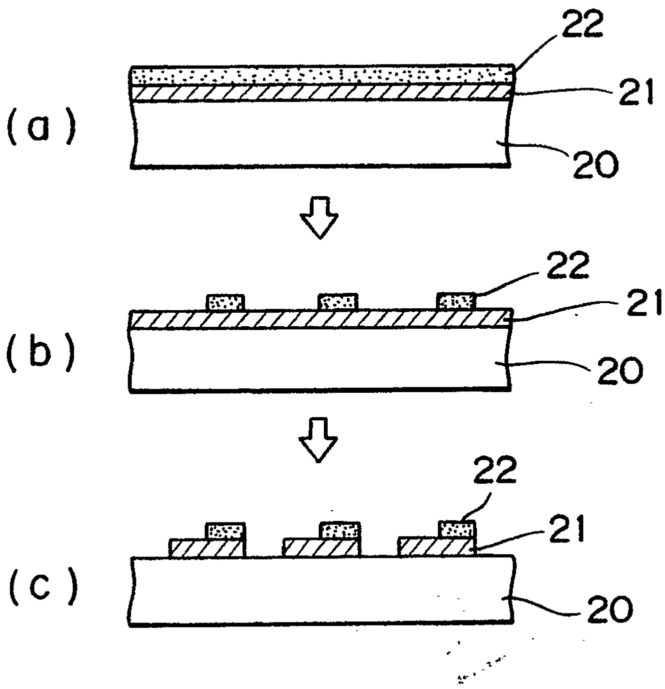


FIG. 2

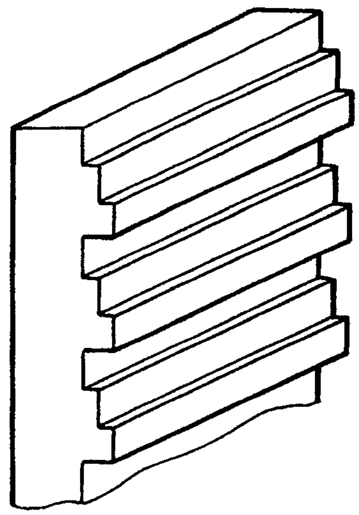

FIG. 3

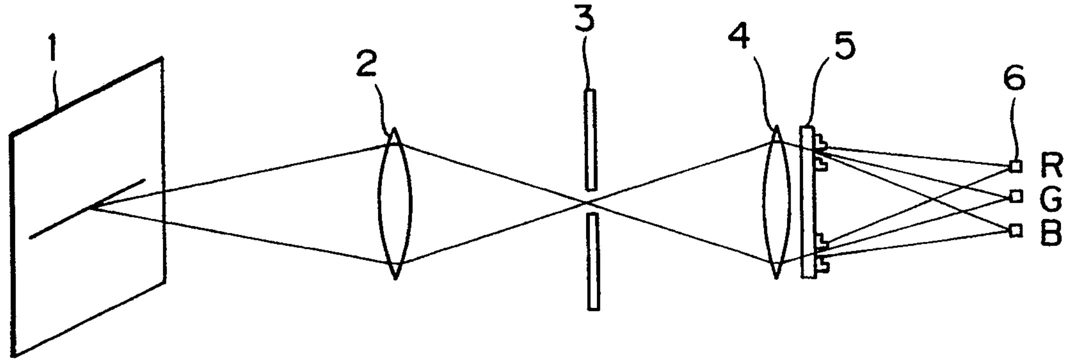

FIG. 4